# EUROPEAN PATENT APPLICATION

(11) **EP 4 741 345 A1**
(43) Date of publication of application: **13.05.2026**
(21) Application number: 24840005.3
(22) Date of filing: 05.07.2024
(51) Int. Cl.: C01D 3/14, C01D 3/16, C01D 3/04, B01D 9/00, B01D 53/34, C22B 7/02, C22B 3/20

(54) **HIGH-PURITY POTASSIUM CHLORIDE PREPARATION METHOD USING DUST, AND HIGH-PURITY POTASSIUM CHLORIDE PREPARED THEREBY**

(30) Priority: 07.07.2023 KR 20230088481; 07.07.2023 KR 20230088482; 07.07.2023 KR 20230088484
(71) Applicant: LG Chem, Ltd., Seoul 07336 (KR)
(72) Inventor: KIM, Gyu Sun, Daejeon 34122 (KR); LEE, Hyun Min, Daejeon 34122 (KR); AHN, Seong Yong, Daejeon 34122 (KR); SUN, Kyung Bok, Daejeon 34122 (KR); BAE, Heung Kwon, Daejeon 34122 (KR); CHOI, Yun Seok, Daejeon 34122 (KR)
(74) Representative: Goddar, Heinz J.
(86) International application number: PCT/KR2024/009565
(87) International publication number: WO 2025/014193

(57) **Abstract**

The present invention relates to a method for preparing potassium chloride, the method capable of obtaining high-purity potassium chloride which may be used for fertilizers and industrial purposes by successively performing purification, two-stage evaporation and concentration, and cooling and crystallization on dust obtained from an exhaust gas generated during cement firing, and high-purity potassium chloride prepared by the preparation method.

## Description

### TECHNICAL FIELD

### Cross-reference to Related Applications

This application claims the benefit of Korean Patent Application Nos. 10-2023-0088481, 10-2023-0088482, and 10-2023-0088484 filed on July 7, 2023, in the Korean Intellectual Property Office, the disclosures of which are incorporated herein in their entirety by reference.

### Technical Field

The present invention relates to a novel method for preparing potassium chloride, the method capable of preparing high-purity potassium chloride by utilizing dust obtained from an exhaust gas generated during cement firing, and high-purity potassium chloride prepared by the preparation method.

### BACKGROUND ART

Cement is the most commonly used building material in the modern world, and is manufactured through a process of firing a raw material including limestone in equipment such as a rotary kiln. Since the raw material needs to be heated to a high temperature of 1,000 °C or higher during the firing process, a large amount of energy needs to be supplied, and to this end, a large amount of fuel is used. However, when natural gas or petroleum is used as a fuel in the above process, there is a problem in that process cost is greatly increased, so that in recent years, waste plastics or the like have been used as the fuel to achieve two purposes of reducing the process cost and smoothly disposing waste.

However, in the waste plastics, there is a large amount of harmful components, such as heavy metals derived from various additives added during a process of manufacturing plastics, or chlorine derived from plastics such as polyvinyl chloride, and the harmful components are included as they are in a dust component generated during a combustion process. Although such a dust component has typically been processed through landfill, there is a limitation in processing using the landfill, so that there is ongoing research on a method capable of efficiently processing the dust.

As an example, since a large amount of chlorine is included in the dust, there are various studies on recovering the same in the form of potassium chloride. However, the purity of recovered potassium chloride is not high in the prior art, so that there is a limitation in utilizing the recovered potassium chloride for agricultural use or industrial purposes, and energy used in the process is not small, so that it is also not advantageous in terms of cost.

Accordingly, the present invention is to provide a novel method for preparing potassium chloride, the method capable of efficiently preparing high-purity potassium chloride from dust.

### DISCLOSURE OF THE INVENTION

### TECHNICAL PROBLEM

An aspect of the present invention is to provide a method for preparing potassium chloride, the method capable of preparing high-purity potassium chloride at a high yield from dust in an exhaust gas generated during a cement firing process, and high-purity potassium chloride prepared by the preparation method.

### TECHNICAL SOLUTION

According to an aspect of the present invention, there are provided a method for preparing potassium chloride and high-purity potassium chloride.

More specifically, (1) the present invention provides a method for preparing potassium chloride, the method including the steps of S10 preparing a potassium chloride aqueous solution by removing heavy metals from a dust aqueous solution, S20 performing two-stage evaporation and concentration on the potassium chloride aqueous solution obtained in the step of S10, S30 obtaining a potassium chloride slurry by cooling and crystallizing the potassium chloride aqueous solution obtained in the step of S20, and S40 obtaining potassium chloride powder by dehydrating and drying the potassium chloride slurry obtained in the step of S30, wherein primary evaporation and concentration in the step of S20 is performed at 85 °C to 97 °C, secondary evaporation and concentration in the step of S20 is performed at 60 °C to 70 °C, and the difference between the saturation concentration of the potassium chloride aqueous solution at the temperature at which the primary evaporation and concentration is performed and the potassium chloride concentration of the potassium chloride aqueous solution formed after the primary evaporation and concentration is 2.5 wt% or greater.
(2) In (1) above, the present invention provides a method for preparing potassium chloride, wherein the step of S10 is to introduce carbon dioxide to the dust aqueous solution to precipitate and remove heavy metals.
(3) In (1) or (2) above, the present invention provides a method for preparing potassium chloride, wherein the step of S10 includes a primary mineralization step S11 and a secondary mineralization step S12, wherein the weight ratio of carbon dioxide introduced in the step of S11 and the step of S12 is 100:1 to 100:10.
(4) In any one among (1) to (3) above, the present invention provides a method for preparing potassium chloride, wherein the method further includes a step of (S13) removing sulfate from the potassium chloride aqueous solution between the step of S10 and the step of S20.
(5) In any one among (1) to (4) above, the present invention provides a method for preparing potassium chloride, wherein the step of S13 is to allow the potassium chloride aqueous solution to pass through a filter membrane including a polyamide nanofiber layer.
(6) In any one among (1) to (5) above, the present invention provides a method for preparing potassium chloride, wherein the difference between the saturation concentration of the potassium chloride aqueous solution at the temperature at which the secondary evaporation and concentration is performed and the potassium chloride concentration of the potassium chloride aqueous solution formed after the secondary evaporation and concentration is 0 wt% to 0.8 wt%.
(7) In any one among (1) to (6) above, the present invention provides a method for preparing potassium chloride, wherein the step of S30 is to perform the cooling at a rate of 5 °C/10 min to 15 °C/10 min.
(8) In any one among (1) to (7) above, the present invention provides a method for preparing potassium chloride, wherein the step of S30 is to perform stirring at a rate of 50 RPM to 350 RPM.
(9) In any one among (1) to (8) above, the present invention provides a method for preparing potassium chloride, wherein the step of S30 is to terminate the cooling at a temperature of 10 °C to 30 °C.
(10) In any one among (1) to (9) above, the present invention provides a method for preparing potassium chloride, wherein the moisture content of the potassium chloride powder is 0.5 wt% or less.
(11) In any one among (1) to (10) above, the present invention provides a method for preparing potassium chloride, wherein the dust is obtained from an exhaust gas generated during a cement firing process.
(12) The present invention provides high-purity potassium chloride having a purity of potassium chloride of 96.5 wt% or greater, and satisfying at least one of the following conditions i) to iii):
   i) the content of sulfate is 0.050 wt% to 0.300 wt%
   ii) the content of bromine is 400 weight ppm to 800 weight ppm
   iii) the content of aluminum is 200 weight ppb to 10,000 weight ppb.

### ADVANTAGEOUS EFFECTS

A method for preparing potassium chloride according to the present invention introduces a mineralization step and a two-stage evaporation and concentration step, and optimizes the temperature and degree of concentration at each stage in the two-stage evaporation and concentration process, and thus, may efficiently prepare high-purity potassium chloride without the occurrence of a fouling phenomenon.

In addition, although potassium chloride prepared by the preparation method of the present invention uses dust as a raw material, the potassium chloride has a low content of impurities and a very high purity, and thus, may be suitable enough to be used for fertilizers and industrial purposes.

### MDOE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

The terminology used herein is for the purpose of describing particular exemplary embodiments only and is not intended to be limiting of the present invention. The terms of a singular form may include plural forms unless the context clearly indicates otherwise.

In the present specification, it should be understood that the term "include," "comprise," or "have" is intended to specify the presence of stated features, numbers, steps, elements, or combinations thereof, but do not preclude the presence or addition of one or more other features, numbers, steps, elements, or combinations thereof.

In the present specification, the term "dust" refers to solid components included in an exhaust gas generated during a cement firing process, and specific compositions and contents of the solid compositions may vary depending on the composition of a fuel used in the cement firing process, but it can be understood that there is a large amount of heavy metals and chlorine in the solid components. More specifically, the dust may be obtained by collecting and then filtering an exhaust gas generated during a cement firing process.

A process of preparing potassium chloride by utilizing dust obtained from an exhaust gas generated during cement firing generally includes a mineralization process or an evaporative and concentration process for removing heavy metals. In the case of a typical method for preparing potassium chloride by the mineralization process or evaporation and concentration process, the purity of prepared potassium chloride is at maximum 97 wt%, so that the potassium chloride is not suitable to be used for fertilizers and industrial purposes. Accordingly, in order to prepare high-purity potassium chloride, the present invention provides a novel method for preparing potassium chloride, the method capable of preparing a higher-purity potassium chloride by purification, evaporation and concentration, and cooling and crystallization for removing heavy metals from the dust, and high-purity potassium chloride prepared from the above-described preparation method.

### Method for preparing potassium chloride

The present invention provides a method for preparing potassium chloride, the method including the steps of S10 preparing a potassium chloride aqueous solution by removing heavy metals from a dust aqueous solution, S20 performing two-stage evaporation and concentration on the potassium chloride aqueous solution obtained in S10 above, S30 obtaining a potassium chloride slurry by cooling and crystallizing the potassium chloride aqueous solution obtained in S20 above, and S40 obtaining potassium chloride powder by dehydrating and drying the potassium chloride slurry obtained in S30 above, wherein primary evaporation and concentration in S20 above is performed at 85 °C to 97 °C, secondary evaporation and concentration in S20 above is performed at 60 °C to 70 °C, and the difference between the saturation concentration of the potassium chloride aqueous solution at the temperature at which the primary evaporation and concentration is performed and the potassium chloride concentration of the potassium chloride aqueous solution formed after the primary evaporation and concentration is 2.5 wt% or greater.

Hereinafter, each step of the method for preparing potassium chloride according to the present invention will be described in more detail.

### (1) Removing of heavy metals S10

Dust obtained from an exhaust gas generated during a cement firing process includes various heavy metals, and it is necessary to remove the heavy metals in order to use potassium chloride for fertilizers or industrial purposes.

Meanwhile, the method for preparing potassium chloride according to the present invention may first perform, before removing heavy metals from a dust aqueous solution to prepare a potassium chloride aqueous solution, a step S01 of preparing the dust aqueous solution by mixing dust and water, and then a step S10 of removing heavy metals from the dust aqueous solution obtained in S01 above. The weight ratio between the water and the dust mixed in S01 above is not particularly limited, but it may be preferable that the mixing is performed such that the concentration of potassium chloride in the dust aqueous solution is 10 wt% or less. It is possible to dissolve a sufficient amount of potassium chloride in water from the dust only if a large amount of water is used such that the concentration of potassium chloride in the dust aqueous solution is in the range described above.

The removal of heavy metals in the present step may be performed by introducing carbon dioxide into the dust aqueous solution to precipitate and remove the heavy metals. When the carbon dioxide is introduced to the dust aqueous solution, heavy metal cations may be combined with carbonic acid anions to form a metal carbonate, and the metal carbonate may be precipitated and easily removed from the dust aqueous solution.

Meanwhile, in the method for preparing potassium chloride according to the present invention, S10 above includes a primary mineralization step S11 and a secondary mineralization step S12, wherein the weight ratio of carbon dioxide introduced in S11 above and S12 above may be 100:1 to 100:10.

If a mineralization step is divided and performed as described above, and the weight ratio of carbon dioxide introduced in a primary step and a secondary step is within the above-described range, the amount of wasted carbon dioxide may be minimized by taking advantage of the fact that more heavy metals are precipitated at the beginning of a mineralization process. More specifically, the weight ratio of carbon dioxide added in S11 above and S12 above may be 100:1, 100:2, 100:3, 100:4 or greater, and 100:10, 100:9, 100:8, 100:7, 100:6, or less.

Meanwhile, in the present step, only heavy metals are selectively removed, and the temperature of the aqueous solution is not changed, so that the concentration or temperature of potassium chloride in the potassium chloride aqueous solution prepared in the present step may be similar to the concentration and temperature of potassium chloride in the dust aqueous solution prepared in S01 above.

Meanwhile, the dust aqueous solution includes a sulfate as an impurity in addition to heavy metals, and accordingly, after the heavy metals are removed by means of the mineralization process, and the sulfate in the dust aqueous solution may be further removed. More specifically, the dust obtained from the generated exhaust gas may include a significant amount of sulfate, and if the sulfate in potassium chloride finally prepared is above a predetermined level, when the obtained potassium chloride is used for electrolysis or the like, the lifespan of an electrode is shortened and the yield is lowered, thereby causing a problem of an increase in production cost, so that it is necessary to reduce the content of the sulfate by introducing a process of removing the sulfate. Therefore, the method for preparing potassium chloride according to the present invention may further include a step S 1 3 of removing sulfate in the potassium chloride aqueous solution between S10 above and S20 above.

The removal of the sulfate may be performed by various methods, and as an example, S13 above may be to allow the potassium chloride aqueous solution to pass through a filtration membrane including a polyamide nanofiber layer. When the potassium chloride aqueous solution is passed through the filtration membrane, component particles in the potassium chloride aqueous solution may be charged while passing through the nanofiber, and among the component particles, a sulfate may become monovalent particles and adsorbed onto the nanofiber layer to be removed from the aqueous solution.

### (2) Evaporation and concentration S20

The potassium chloride aqueous solution prepared in the previous step includes a certain amount of potassium chloride, and the potassium chloride aqueous solution may be immediately cooled and crystallized to prepare potassium chloride. However, as described above, the concentration of potassium chloride in the potassium chloride aqueous solution is 10 wt% or less, which is not high, so that even if the cooling and crystallization is performed, the efficiency thereof is low. Therefore, in order to further increase the efficiency of a cooling and crystallization step to be described later, an evaporation and concentration step may be performed to increase the concentration of potassium chloride in the aqueous solution by partially removing a solvent of the potassium chloride aqueous solution before the cooling and crystallization.

In the present invention, the evaporation and concentration may be performed in two stages. In the present invention, the performing of evaporation and concentration in two stages refers to performing evaporation and concentration such that a potassium chloride aqueous solution sequentially passes through two evaporators connected in series to allow the concentration of potassium chloride in the aqueous solution to gradually increase. If evaporation and concentration is performed in a single stage, the concentration of a potassium chloride aqueous solution may not be finely controlled in an evaporation and concentration process, and accordingly, a fouling phenomenon may occur in some regions of an evaporator. Meanwhile, if there are too many stages in evaporation and concentration, the space occupied by evaporation and concentration equipment increases, which may not be desirable in terms of economic feasibility.

In the present step, the primary evaporation and concentration may be performed at 85 °C to 97 °C, preferably 90 °C to 97 °C. Since the concentration of potassium chloride in the potassium chloride aqueous solution introduced in the first stage is the lowest, a fouling phenomenon does not occur even when water is removed in a short period time at a relatively high temperature in the first stage, and accordingly, it may be particularly preferable that the operating temperature of the evaporation and concentration step of the first stage satisfies the above-described conditions for the efficiency of the overall process.

The secondary evaporation and concentration may be performed at 60 °C to 70 °C, preferably 65 °C to 70 °C. As described above, by lowering the temperature during the secondary evaporation and concentration to a predetermined level with respect to the temperature during the primary evaporation and concentration, it is possible to control changes in potassium chloride saturated concentration at a process temperature to a predetermined level or lower, through which a sudden fouling phenomenon may be prevented from occurring.

The difference between the saturation concentration of the potassium chloride aqueous solution at the temperature at which the primary evaporation and concentration is performed and the potassium chloride concentration of the potassium chloride aqueous solution formed after the primary evaporation and concentration may be 2.5 wt% or greater, preferably 2.5 wt% or greater, 3.0 wt% or greater, or 3.5 wt% or greater, and 7.0 wt% or less, 6.5 wt% or less, 6.0 wt% or less, 5.5 wt% or less, or 5.0 wt% or less. If the concentration of the potassium chloride aqueous solution formed after the primary evaporation and concentration is excessively close to the saturation concentration, fouling may occur in the secondary evaporation and concentration step, and if the concentration of the potassium chloride aqueous solution formed after the primary evaporation and concentration is excessively lower than the saturation concentration, the amount of water removed may not be sufficient even after the secondary evaporation and concentration step. Particularly, if a fouling phenomenon occurs in the evaporation and concentration process, the purity of finally obtained potassium chloride may decrease, and liquids and solids are separated while being transferred to the following step, which may cause a problem in that the transfer itself is not facilitated.

In addition, the difference between the saturation concentration of the potassium chloride aqueous solution at the temperature at which the secondary evaporation and concentration is performed and the potassium chloride concentration of the potassium chloride aqueous solution formed after the secondary evaporation and concentration may be 0 wt% to 0.8 wt%, preferably 0 wt% to 0.3 wt%. The concentration of the potassium chloride aqueous solution formed after the secondary evaporation and concentration is close to almost the saturated concentration, but no fouling phenomenon has occurred, and accordingly, the efficiency of the cooling and crystallization step to be described later may be maximized. In the secondary evaporation and concentration step, the concentration of the potassium chloride aqueous solution is increased to be close to the saturation concentration, and the concentration of the potassium chloride aqueous solution may be slowly increased to suppress a fouling phenomenon.

Meanwhile, the evaporation and concentration in the present step may be to increase the temperature of the potassium chloride aqueous solution to selectively remove only water, which is a solvent, and the saturation concentration refers to a saturation concentration when potassium chloride is maximally dissolved under a temperature condition for performing the evaporation and concentration step.

The potassium chloride aqueous solution which has undergone S20 above may have different concentrations of potassium chloride different depending on the temperature, but may typically have a concentration of 20 wt% or greater, specifically 20 wt% to 40 wt%, preferably 28 wt% or greater, 29 wt% or greater, or 30 wt% or greater, and 35 wt% or less, 34 wt% or less, or 33 wt% or less. In addition, the potassium chloride aqueous solution may have a temperature of 50 °C or higher, preferably 55 °C to 80 °C. As described above, if the concentration of potassium chloride in the potassium chloride aqueous solution is increased, potassium chloride crystals may be more easily obtained in the cooling and crystallization step to be described later.

### (3) Cooling and crystallization S30

After obtaining the potassium chloride aqueous solution which has undergone S20 above, the method for preparing potassium chloride according to the present invention includes obtaining a potassium chloride slurry including potassium chloride crystals and the potassium chloride aqueous solution by cooling and crystallizing the potassium chloride aqueous solution.

After the previous evaporation and concentration step, the concentration of potassium chloride in the potassium chloride aqueous solution is sufficiently increased, and the lower the temperature of potassium chloride, the lower the solubility to water, so that the aqueous solution may be cooled to form potassium chloride crystals. However, since it is not possible to crystallize the entire amount of dissolved potassium chloride by cooling, the slurry formed as a result of cooling includes potassium chloride crystals and a portion of the potassium chloride aqueous solution at the same time.

Specifically, S30 above is characterized by performing cooling at a rate of 5 °C/10 min to 15 °C/10 min, and more specifically, the cooling rate may be 5 °C/10 min or greater, or 6 °C/10 min or greater, and may also be 15 °C/10 min or less, 14 °C/10 min or less, 13 °C/10 min or less, 12 °C/10 min or less, 11 °C/10 min or less, 10 °C/10 min or less, 9 °C/10 min or less, or 8 °C/10 min or less. If the cooling and crystallization is performed in the above-described cooling rate range, the cooling rate is suitable to maximally prevent other components other than potassium chloride from being precipitated together, so that high-purity potassium chloride may be obtained.

If the cooling rate is too high, nucleation is not sufficient due to rapid cooling, so that the purity of finally obtained potassium chloride may be lowered, and if the cooling rate is too low, reaction time and energy consumption are increased, so that economic feasibility of the overall preparation process may be reduced.

Meanwhile, S30 is characterized by performing stirring at a rate of 50 RPM to 350 RPM, and the stirring rate may be 50 RPM or greater, 75 RPM or greater, 100 RPM or greater, 125 RPM or greater, or 150 RPM or greater, and 350 RPM or less, 300 RPM or less, 250 RPM or less, 200 RPM or less, or 150 RPM or less. If the cooling and crystallization is performed in the above-described stirring rate range, the potassium chloride aqueous solution is uniformly mixed during the cooling and crystallization process, so that uniform crystallization may be achieved, and accordingly, high-purity potassium chloride may be obtained.

If the stirring rate is too high, the precipitation of potassium chloride may be disturbed due to the stirring itself, and at the same time, dispersion force becomes greater than cohesion force, so that small potassium chloride particles are formed, which may result in lowering the purity of potassium chloride. Meanwhile, if the stirring rate is too low, the purpose of stirring, which is uniformization, may not be sufficiently achieved, and in this case, the cohesion force becomes greater than the dispersion force, so that particles themselves may become large, but have a cubic shape, which may also result in lowering the purity of potassium chloride.

Meanwhile, the cooling and crystallization in S30 above is characterized in that the cooling is terminated at a temperature of 10 °C to 30 °C, and the temperature at which the cooling is terminated may specifically be 15 °C to 20 °C, or may be 30 °C or lower, 25 °C or lower, or 20 °C or lower. If the temperature at which the cooling is terminated is too high, the amount of precipitated potassium chloride is not sufficiently large, so that the amount of finally obtained potassium chloride may be small, and if the temperature at wh ich the cooling is terminated is too low, antifreeze other than water is required to be used as a coolant, so that process cost may increase. Particularly, if water is used as cooling water, waste heat of an exhaust gas including dust and an absorption refrigerator may be used to produce the cooling water, which may reduce the overall cost of the process, but if antifreeze is used as cooling water instead of water, an expensive freezer is required to be used instead of utilizing the waste heat of the exhaust gas as described above, so that equipment cost may increase. In addition, a large amount of energy may be consumed to cool the potassium chloride aqueous solution to a temperature which is too low. On the other hand, if the cooling temperature is too high, crystallization of potassium chloride is not sufficiently achieved, so that the yield of finally obtained potassium chloride may be lowered.

As described above, in the present step, the potassium chloride aqueous solution may be cooled by using cooling water, and the cooling water may be produced using waste heat of an exhaust gas from which dust is obtained. The temperature of an exhaust gas itself discharged during a cement firing process is also very high due to a high temperature during the firing process, and accordingly, if waste heat of the exhaust gas is used, it is possible to efficiently produce cooling water while minimizing additional energy consumption. In the above-described process of producing cooling water, an absorption refrigerator may be used.

The temperature of a slurry prepared through the present step may be 40 °C or lower. The temperature of the slurry has already been sufficiently lowered through the cooling step, and if the temperature of the slurry is within the above-described range, crystallization is sufficiently achieved, so that the yield of potassium chloride may be high.

Cooling and crystallization equipment used in the present step may be cooling and crystallization equipment commonly used. Meanwhile, since a fouling phenomenon of potassium chloride crystals may occur during the cooling and crystallization process, cooling and crystallization equipment provided with a scraper and the like inside the equipment may be applied to suppress the fouling phenomenon.

### (4) Dehydration and drying S40

The method for preparing potassium chloride of the present invention dries the potassium chloride slurry through the dehydration and drying S40 to remove moisture until the moisture content in finally prepared potassium chloride satisfies 0.5 wt% or less.

Specifically, S40 above is a step of removing moisture contained in the potassium chloride slurry by using dehydration equipment and a drying apparatus, and the dehydration equipment and the drying apparatus may be applied without limitation as long as they can perform a function of remove the moisture.

As an example, dehydration equipment that is commonly used, such as a centrifugal dehydrator, may be used as the dehydration equipment. In addition, a drying apparatus provided with a rotary blade inside the body may be used as the drying apparatus. More specifically, drying may be performed by introducing a potassium chloride slurry into an internal space of the body of the drying apparatus, and then heating the inside of the drying apparatus while rotating a rotary shaft to which the rotary blade is attached, thereby allowing high-purity potassium chloride to form a thin film on an internal wall surface of the body. If the above-described drying method is performed, there is an advantage in that the efficiency of heat transfer to an object to be dried is high and drying is performed without blind spots, so that drying time may be reduced.

As described above, if the slurry is dried while rotating the rotor blade, the rotational rate thereof may be 100 RPM or greater, preferably 180 RPM or greater, and 500 RPM or less. If the rotation rate is too low, the rotation rate may be too low, so that the object to be dried may not form a thin film on the internal wall surface of the body and settle to the bottom of the body, and accordingly, the object to be dried may be dried unevenly. On the other hand, if the rotation rate is too high, there may be a phenomenon in which a thin film formed by force generated by the rotation may rather break.

### High-purity potassium chloride

The method for preparing potassium chloride of the present invention described above may obtain high-purity potassium chloride from chlorine dust generated in a cement firing process, and specifically, may obtain high-purity potassium chloride having a purity of 96.5 wt%, preferably a purity 97 wt%, 97.5 wt%, 98 wt%, or 98.5 wt% or greater, which is a level suitable for use in fertilizers and industrial purposes. On the other hand, since the high-purity potassium chloride of the present invention is obtained from dust generated in a cement firing process, the potassium chloride is characterized by having a purity of 98.5 wt% or greater, and at the same time, has a relatively high content of some impurities derived from the dust.

More specifically, the high-purity potassium chloride of the present invention is characterized by satisfying at least one, preferably two or more, or all of the following conditions i) to iii):
i) the content of sulfate is 0.050 wt% to 0.300 wt%
ii) the content of bromine is 400 weight ppm to 800 weight ppm
iii) the content of aluminum is 200 weight ppb to 10,000 weight ppb.

Specifically, the high-purity potassium chloride of the present invention may have a content of sulfate (SO₄) of 0.050 wt% to 0.300 wt%, specifically 0.050 wt% or greater, 0.075 wt% or greater, or 0.100 wt% or greater, and may also be 0.300 wt% or less, 0.275 wt% or less, 0.250 wt% or less, 0.225 wt% or less, or 0.200 wt% or less.

In addition, the high-purity potassium chloride of the present invention may have a content of bromine (Br) of 400 weight ppm to 800 weight ppm, specifically 400 weight ppm or greater, 450 weight ppm or greater, 500 weight ppm or greater, or 550 weight ppm or greater, and may also be 800 weight ppm or less, 750 weight ppm or less, 700 weight ppm or less, or 650 weight ppm or less.

In addition, the high-purity potassium chloride of the present invention may have a content of aluminum (Al) of 200 weight ppb to 10,000 weight ppb, specifically 200 weight ppb or greater, 1,000 weight ppb or greater, 1,500 weight ppb or greater, or 2,000 weight ppb or greater, and may also be 10,000 weight ppb or less, 9,000 weight ppb or less, 8,000 weight ppb or less, or 7,000 weight ppb or less.

The high-purity potassium chloride of the present invention is prepared from dust, thereby including certain amounts of the above-described types of components, which are components included in the dust, and at the same time, having a high purity, and thus, may implement the same level of performance when compared to a typical potassium chloride product prepared by refining minerals, thereby not at all including the above-described components or including trace amounts thereof.

Hereinafter, the present invention will be described in more detail with reference to examples and experimental examples, but the present invention is not limited by these examples and experimental examples. The examples according to the present invention may be modified into other various forms, and the scope of the present invention should not be construed as being limited to the examples described below. The examples of the present invention are provided to more fully describe the present invention to those skilled in the art.

### Experimental Example 1. Confirmation of occurrence of fouling as result of two-stage evaporation and concentration

As summarized in Tables 1 and 2 below, an evaporator was designed in a multistage manner, and a potassium chloride aqueous solution having a potassium chloride concentration of about 6 wt% was evaporated and concentrated in two stages. The saturation concentration according to temperature conditions in the evaporation and concentration process and the concentration of potassium chloride in the potassium chloride aqueous solution after passing through each stage are described in Tables 1 and 2 below. In addition, the process time described in Table 1 below refers to time taken until the concentration of a final aqueous solution has achieved.

**[Table 1]**

| | | Example 1-1 | Example 1-2 | Example 1-3 | Example 1-4 | Example 1-5 | Comparative Example 1-6 |
|---|---|---|---|---|---|---|---|
| Number of stages | | 2 | 2 | 2 | 2 | 2 | 2 |
| First stage | Temperature (°C) | 90 | 95 | 97 | 90 | 90 | 90 |
| | Concentration after first stage (%) | 30.9 | 30.9 | 30.9 | 30.2 | 31.6 | 33.1 |
| | Saturation concentration under process temperature conditions (%) | 35.1 | 35.7 | 35.9 | 35.1 | 35.1 | 35.1 |
| Second stage | Temperature (°C) | 65 | 65 | 65 | 60 | 70 | 65 |
| | Concentration after second stage (%) | 31.6 | 31.6 | 31.6 | 30.9 | 32.6 | 31.9 |
| | Saturation concentration under process temperature conditions (%) | 31.9 | 31.9 | 31.9 | 31.2 | 32.6 | 31.9 |
| Process time (minute) | | 120 | 115 | 105 | 125 | 110 | Occurrence of crystallization |

**[Table 2]**

| | | Comparative Example 1-1 | Comparative Example 1-2 | Comparative Example 1-3 | Comparative Example 1-4 | Comparative Example 1-5 |
|---|---|---|---|---|---|---|
| Number of stages | | 1 | 1 | 1 | 1 | 1 |
| Fir | Temperature (°C) | 50 | 70 | 80 | 90 | 97 |
| st stage | Concentration after first stage (%) | 19.8 | 32.3 | 33.6 | 34.9 | 32.9 |
| | Saturation concentration under process temperature conditions (%) | 29.8 | 32.6 | 33.9 | 35.1 | 35.9 |
| Process time (minute) | | 600 | 240 | 200 | Occurrence of crystallization | Occurrence of crystallization |

As described in Tables 1 and 2 above, in the case of the potassium chloride aqueous solution prepared in Examples of the present invention which have undergone the two-stage evaporation and concentration, it has been confirmed that the concentration is close to saturation concentration, yet no crystallization has occurred, and the process time required to reach a target concentration is also short.

Meanwhile, in the case of Comparative Examples 1-1 to 1-5 in which the evaporation and concentration was performed in one stage, it has been confirmed that in Comparative Example 1-1 in which the concentration was performed at a relatively low temperature, energy required for evaporation was not sufficiently supplied so that the process time was significantly increased, and also the concentration of the aqueous solution was not sufficiently increased, and that in Comparative Examples 1-2 and 1-3 in which the evaporation and concentration was performed at a relatively high temperature, the concentration of the aqueous solution was successfully increased to equal to or higher than a predetermined degree, but the process time was almost twice as long as that of Examples in which a multi-stage evaporation and concentration was performed. In addition, in the case of Comparative Examples 1-4 and 1-5 in which the evaporation and concentration was performed at a temperature similar to that of the first stage in Examples of the present invention, crystallization occurred due to the failure to finely control the concentration of the aqueous solution, and accordingly, there was the occurrence of a process defect.

In addition, also in the case of Comparative Examples 1-6 in which the evaporation and concentration was performed in two stages but the difference between the saturation concentration of the potassium chloride aqueous solution at the temperature at which the primary evaporation and concentration was performed and the potassium chloride concentration of the potassium chloride aqueous solution formed after the primary evaporation and concentration was set to 2.0 wt%, which is less than 2.5 wt%, crystallization occurred in the second-stage evaporation and concentration process due to an excessively high concentration of the aqueous solution introduced into the two-stage evaporation and concentration, and accordingly, there was the occurrence of a process defect.

From the above-described results, it has been confirmed that if the concentration of a potassium chloride aqueous solution is increased through two-stage evaporation and concentration, the concentration of the aqueous solution may be increased close to the saturation concentration without a fouling phenomenon, and such a highly concentrated potassium chloride aqueous solution may undergo a subsequent cooling and concentration step and be used to prepare high-purity potassium chloride more efficiently.

### Experimental Example 2. Comparison of purity and impurity content according to cooling and crystallization conditions

Dust was obtained from an exhaust gas generated in a cement firing process and mixed with water at a weight ratio of 1:3, and then carbon dioxide was introduced thereto to precipitate heavy metals in the dust in the form of a carbonate. The solution was filtered to remove the carbonate, which is a heavy metal, and evaporated and concentrated at 65 °C for about 1 hour to obtain a potassium chloride aqueous solution. 1,063.5 g of the prepared potassium chloride aqueous solution was added to 1,870.5 g of ultrapure water, heated to 80 °C in an oil bath, and then stirred at 800 rpm for 30 minutes. Thereafter, insoluble components were filtered and removed from the mixture by using a vacuum filtration apparatus, and then the remaining mixture was introduced into a 5 L reactor and heated to 80 °C. The potassium chloride aqueous solution was then cooled and crystallized to obtain a potassium chloride slurry. The obtained potassium chloride slurry was dehydrated, and then dried at 90 °C for 24 hours to prepare potassium chloride powder. Potassium chloride powder was obtained for a total of five cases by varying the cooling rate and stirring rate of the cooling and crystallization.

As a comparative group of the above-described potassium chloride powder, potassium chloride powder of Comparative Example 2-1 was obtained by performing only the evaporation and concentration process, and reagent-grade potassium chloride of Junsei Company and industrial potassium chloride of Unid Company were used as potassium chloride powder of Comparative Examples 2-2 and 2-3, respectively.

The purity of the obtained potassium chloride powder was measured, and the contents of sulfate, Al, and Br were measured by the following method.

### 1) Purity of potassium chloride (Morh titration method)

About 100 mg of obtained potassium chloride was introduced into a conical-beaker, mixed with 65 g of ultrapure water, and stirred at a rate of 100 rpm to 300 rpm for about 5 minutes using a magnetic stirrer. Thereafter, 1 ml of 1 wt% of K₂CrO₄ was introduced as a reagent into the conical-beaker, and a solution of 0.1 N AgNO₃ was added dropwise until the potassium chloride aqueous solution turned red. The purity of potassium chloride was calculated from the amount of the AgNO₃ solution introduced until the potassium chloride aqueous solution turned red.

### 2) Content of sulfate and Al

The measurements were performed using ICP-MS.

### 3) Content of Br

The measurement was performed using an XRF analysis method.

The results are summarized in Table 3 below.

**[Table 3]**

| | Cooling rate (°C/10 min) | Stirring rate (RPM) | Purity of potassium chloride (wt% ) | Content of sulfate (wt% ) | Content of Br (weight ppm) | Content of Al (weight ppb) |
|---|---|---|---|---|---|---|
| Example 2-1 | 7 | 100 | 99.0 | 0.143 | 721 | 7096 |
| Example 2-2 | 7 | 300 | 98.6 | 0.125 | 722 | 484 |
| Example 2-3 | 15 | 300 | 96.5 | 0.127 | 1280 | 515 |
| Example 2-4 | 15 | 100 | 96.8 | 0.120 | 1242 | 467 |
| Example 2-5 | 11 | 200 | 97.3 | TRACE | 1,100 | 1,160 |
| Comparative Example 2-1 | - | - | 91.9 | 0.474 | 892 | 46316 |
| Comparative Example 2-2 | - | - | 99.4 | TRACE | 91 | 17 |
| Comparative Example 2-3 | - | - | 99.0 | 0.001 | 100 | 73 |

As can be confirmed from Table 3 above, it has been confirmed that the methods for preparing potassium chloride of all of the potassium chloride of Examples, in which the cooling and crystallization was performed at a cooling rate of 5 °C/min to 15 °C/min, are all capable of preparing high-purity potassium chloride having a purity of 98.5 wt% or greater. Particularly, it has been confirmed that the high-purity potassium chloride of each of Examples 2-1 and 2-2 contains certain amounts of sulfate, bromine, and aluminum while having a similarly high purity compared to the potassium chloride of each of Comparative Examples 2-2 and 2-3, which is reagent-grade potassium chloride, and thus, may be used as a substitute for a typical reagent-grade potassium chloride.

In addition, Comparative Example 2-1 prepared potassium chloride through only the evaporation and concentration step as in the prior art, and the purity of the obtained potassium chloride was significantly low compared to that of Examples of the present invention, so that it has been confirmed that even if dust is used to prepare potassium chloride, it is difficult to commercially utilize obtained potassium chloride due to the low purity of the prepared potassium chloride.

## Claims

1. A method for preparing potassium chloride, the method comprising the steps of:
(S10) preparing a potassium chloride aqueous solution by removing heavy metals from a dust aqueous solution;
(S20) performing two-stage evaporation and concentration on the potassium chloride aqueous solution obtained in the step of S10;
(S30) obtaining a potassium chloride slurry by cooling and crystallizing the potassium chloride aqueous solution obtained in the step of S20; and
(S40) obtaining potassium chloride powder by dehydrating and drying the potassium chloride slurry obtained in the step of S30,
wherein:
primary evaporation and concentration in the step of S20 is performed at 85 °C to 97 °C;
secondary evaporation and concentration in the step of S20 is performed at 60 °C to 70 °C; and
the difference between the saturation concentration of the potassium chloride aqueous solution at the temperature at which the primary evaporation and concentration is performed and the potassium chloride concentration of the potassium chloride aqueous solution formed after the primary evaporation and concentration is 2.5 wt% or greater.

2. The method of claim 1, wherein the step of S10 is to introduce carbon dioxide to the dust aqueous solution to precipitate and remove heavy metals.

3. The method of claim 2, wherein the step of S10 comprises a primary mineralization step (S11) and a secondary mineralization step (S12), wherein the weight ratio of carbon dioxide introduced in the step of S11 and the step of S12 is 100:1 to 100:10.

4. The method of claim 1, further comprising a step of (S13) removing sulfate from the potassium chloride aqueous solution between the step of S10 and the step of S20.

5. The method of claim 4, wherein the step of S13 is to allow the potassium chloride aqueous solution to pass through a filter membrane including a polyamide nanofiber layer.

6. The method of claim 1, wherein the difference between the saturation concentration of the potassium chloride aqueous solution at the temperature at which the secondary evaporation and concentration is performed and the potassium chloride concentration of the potassium chloride aqueous solution formed after the secondary evaporation and concentration is 0 wt% to 0.8 wt%.

7. The method of claim 1, wherein the step of S30 is to perform the cooling at a rate of 5 °C/10 min to 15 °C/10 min.

8. The method of claim 1, wherein the step of S30 is to perform stirring at a rate of 50 RPM to 350 RPM.

9. The method of claim 1, wherein the step of S30 is to terminate the cooling at a temperature of 10 °C to 30 °C.

10. The method of claim 1, wherein the moisture content of the potassium chloride powder is 0.5 wt% or less.

11. The method of claim 1, wherein the dust is obtained from an exhaust gas generated during a cement firing process.

12. High-purity potassium chloride having a purity of potassium chloride of 96.5 wt% or greater, and satisfying at least one of the following conditions i) to iii):
i) the content of sulfate is 0.050 wt% to 0.300 wt%
ii) the content of bromine is 400 weight ppm to 800 weight ppm
iii) the content of aluminum is 200 weight ppb to 10,000 weight ppb.
